# EUROPÄISCHE PATENTSCHRIFT

(11) **EP 3 942 545 B1**
(45) Veröffentlichungstag und Bekanntmachung des Hinweises auf die Patenterteilung: **29.11.2023**
(21) Anmeldenummer: 20713830.6
(22) Anmeldetag: 04.03.2020
(51) Int. Cl.: G10K 9/12, G10K 15/00, B60J 7/00, B60J 7/057

(54) **VERFAHREN ZUR VERWENDUNG EINES ZUM ANTRIEB EINER FAHRZEUGDACH-KOMPONENTE GENUTZTEN ELEKTROMOTORS ZUR SCHALLERZEUGUNG**
METHOD FOR USING AN ELECTRIC MOTOR TO GENERATE SOUND, SAID ELECTRIC MOTOR BEING EMPLOYED TO DRIVE A VEHICLE ROOF COMPONENT
PROCÉDÉ D'UTILISATION D'UN MOTEUR ÉLECTRIQUE UTILISÉ POUR L'ENTRAÎNEMENT D'UN COMPOSANT DE TOIT DE VÉHICULE POUR GÉNÉRER DU SON

(30) Priorität: 18.03.2019 DE 102019106748
(43) Veröffentlichungstag der Anmeldung: 26.01.2022
(73) Patentinhaber: Webasto SE, 82131 Stockdorf (DE)
(72) Erfinder: FRITZ, Tobias, 82131 Stockdorf (DE); KAINZ, Benedikt, 82131 Stockdorf (DE); SEILER, Heinz, 82131 Stockdorf (DE); HEISEL, Oliver, 82131 Stockdorf (DE); HUELSEN, Michael, 82131 Stockdorf (DE)
(74) Vertreter: Prüfer & Partner mbB Patentanwälte · Rechtsanwälte
(86) Internationale Anmeldenummer: PCT/EP2020/055650
(87) Internationale Veröffentlichungsnummer: WO 2020/187566

(56) Entgegenhaltungen:
- EP-A2- 0 931 683
- DE-A1-102007 001 007
- DE-A1-102011 005 358
- US-A1- 2010 134 058

## Beschreibung

Die Erfindung betrifft ein Verfahren zur Ansteuerung eines Elektromotors mit einem Motorsteuerungssignal anwendungsspezifischer Frequenz, das von einer elektronischen Motorsteuerungseinheit bereitgestellt wird, wobei der Elektromotor in einem Fahrzeugdach zum Betätigen einer Komponente dieses Dachs mit einem Bereich des Dachs verbunden zum Einsatz kommt.

Komponenten eines Fahrzeugdachs, wie etwa ein Schiebedach oder Beschattungsrollos werden über einen im Fahrzeugdach integrierten Elektromotor angetrieben. Der Elektromotor wird über ein Motorsteuerungssignal betätigt, das von einer Motorsteuerungseinheit bereitgestellt wird, die einen digitalen Prozessor umfasst, der ein Steuerungsprogramm ausführt, das in einem Halbleiterspeicher abgelegt ist, und der ein digitales Motorsteuerungssignal erzeugt, das in analoger Form zur Ansteuerung des Elektromotors zur programmgesteuerten Betätigung der jeweiligen Dach-Komponente ausgibt.

Beim Öffnen und Schließen des Daches/Rollos werden Geräusche erzeugt, die in der Fahrgastzelle als unangenehm und störend wahrgenommen werden. Dieses Geräusch ist konstruktionsbedingt und muss in Kauf genommen werden.

Aus der DE 10 2007 001007 A1 ist ein Verfahren zur Unterdrückung von Störgeräuschen beschrieben, die durch eine Windströmung verursacht werden.

Eine Aufgabe der Erfindung besteht darin, diese Nachteile des Standes der Technik zu überwinden. Hierbei wird aus dem Vorhandensein eines Elektromotors im Bereich des zumindest partiell schwingungsfähigen Fahrzeugdach zur Betätigung von Dachkomponenten zusätzlich Nutzen gezogen.

Gelöst wird diese Aufgabe durch die Merkmale des Anspruchs 1. Vorteilhafte Weiterbildungen der Erfindung sind in den Unteransprüchen festgelegt.

Die Erfindung stellt demnach ein Verfahren zur Ansteuerung eines Elektromotors mit einem Motorsteuerungssignal anwendungsspezifischer Frequenz bereit, das von einer elektronischen Motorsteuerungseinheit bereitgestellt wird, wobei der Elektromotor in einem Fahrzeugdach zum Betätigen einer Komponente dieses Dachs mit einem Bereich des Dachs verbunden zum Einsatz kommt. Erfindungsgemäß ist vorgesehen, dass die Motorsteuerungseinheit dazu eingerichtet ist, den Elektromotor mit einem zusätzlichen Signal anzusteuern, dessen Frequenz und Amplitude geeignet ist, den Bereich des Fahrzeugdachs, mit dem er verbunden ist, zur Schallerzeugung in Schwingung zu versetzen, sodass der Bereich des Fahrzeugdachs, an dem der Elektromotor angebracht ist, zur gezielten Schallabstrahlung genutzt wird.

Zusätzlicher Nutzen wird aus der Anwesenheit des Elektromotors im Dach eines Fahrzeugs zur Betätigung von Dach-Komponenten demnach daraus gezogen, dass der Bereich des Fahrzeugdachs, an dem der Elektromotor angebracht ist, zur gezielten Schallabstrahlung genutzt wird. Diese Schallabstrahlung wird erfindungsgemäß dazu eingesetzt, die mit der Elektromotor- und Dachkomponenten-Betätigung einhergehende Geräuschentwicklung zu reduzieren und alternativ oder gleichzeitig dazu, Audioinformation, wie etwa Musik in die Fahrgastzelle abzustrahlen. Mit anderen Worten wird die Einheit aus Elektromotor und von diesem angetriebener Dachkomponente als Lautsprecher verwendet, um Nutzsignale, wie Musik oder Geräusch-Kompensationsschall abzustrahlen, wie im Folgenden anhand bevorzugter Ausführungsformen des erfindungsgemäßen Verfahrens dargestellt.

Vorteilhafterweise wird mindestens ein zusätzliches Signal als Grundlage der Schallerzeugung dem Motorsteuerungssignal durch die Motorsteuerungseinheit aufgeprägt. Mit der Motorsteuerungseinheit, die wie einleitend dargestellt bevorzugt einen digitalen Prozessor, Speichermittel und einen D/A-Wandler enthält, stehen die benötigten Mittel bereit, um das zusätzliche Signal dem Motorsteuerungssignal aufzuprägen.

Eine komplett neuartige Nutzung des Elektromotors zusammen mit dem Dachbereich, an dem dieser angebracht ist, erschließt sich in Gestalt eines von diesen Bestandteilen gebildeten Lautsprechers, wobei der schwingungsfähige Dachbereich die Lautsprechermembran bildet, während der Elektromotor den elektromotorischen Antrieb der Membran darstellt.

Vorteilhafterweise stellt die Motorsteuerungseinheit das zusätzliche Signal zur Schallerzeugung auf Grundlage vorgegebener Dateien bereit, die Audioinformation in digitaler Form enthalten, die in einem Speicher der Motorsteuerungseinheit abgelegt sind, und die von einem in der Motorsteuerungseinheit enthaltenen D/A-Wandler in das analogen zusätzliche Signal umgesetzt werden. Dieser Speicher lässt sich entweder vom Fahrzeughersteller im Rahmen von z.B. Wartungsarbeiten oder durch den Nutzer des Fahrzeugs selber mit neuen Musikdateien bespielen, wenn eine geeignete Schnittstelle bereitsteht.

Alternativ hierzu stellt die Motorsteuerungseinheit das zusätzliche Signal zur Schallerzeugung auf Grundlage vorgegebener Dateien bereit, die Audioinformation in digitaler Form enthalten, die von einem Empfänger in der Motorsteuerungseinheit empfangen werden, bevorzugt drahtlos empfangen werden, und die von einem in der Motorsteuerungseinheit enthaltenen D/A-Wandler in das analoge zusätzliche Signal umgesetzt werden. In diesem Fall werden Musikdaten bevorzugt per Funk zur Motorsteuerungseinheit übertragen, wie beispielsweise per Bluetooth oder Zigbee. Gemäß einer weiteren vorteilhaften Weiterbildung des erfindungsgemäßen Verfahrens ist das zusätzliche Signal zur Schallabstrahlung von Warntönen über den vom Elektromotor in Schwingung versetzten Dachbereich ausgelegt, Warntöne abzustrahlen. Warntöne können beispielsweise dann abgestrahlt werden, wenn bei geöffnetem Schiebdach Regen einsetzt. Als Warnton kommt in diesem Fall das Einschlaggeräusch von Regentropfen auf einem harten Gegenstand in Betracht. Das erfindungsgemäß erzeugte Schallereignis kann auch zur Dämpfung oder Verringerung unerwünschter Geräusche eingesetzt werden, die vom Elektromotor oder der Bewegung der von ihm angetriebenen Fahrzeug-Dach-Komponenten hervorgerufen werden.

So kann z.B. das zusätzliche Signal bezüglich seiner Frequenz und Amplitude auf das Resonanzverhalten des Elektromotors im in Schwingung versetzten Dachbereich so abgestimmt werden, dass es den Schallanteil der Motorresonanz verringert.

Alternativ oder zusätzlich kann das zusätzliche Signal bezüglich seiner Frequenz und Amplitude derart gewählt werden, dass Funktionsgeräusche von durch den Elektromotor angetriebenen Kfz-Komponenten verringert werden.

Als Anwendungsbeispiele kann an folgende Szenarien gedacht werden:
- Schleifgeräusch eines breitbandigen Antriebskabels
- Schaltgeräusch der Mechanik beim Öffnen/Schließen/Tilten
- Ritzel Eingriff in das Antriebskabel
- Geräusche vom Rollo

Es besteht bevorzugt die Möglichkeit, geeignete Sensoren wie beispielsweise Beschleunigungsaufnehmer oder Schwingungsaufnehmer am Dach bzw. in der Nähe vorzusehen und in Echtzeit Gegenschall zu erzeugen. Es besteht auch die Möglichkeit über das Wissen um die Motorposition, wo genau welches Geräusch entsteht in den verschiedenen über die Motorposition erkannten Szenarien an der jeweiligen Position Gegenschall zu erzeugen. Beide Möglichkeiten können auch kombiniert werden.

Im Rahmen des erfindungsgemäßen Verfahrens kann der Elektromotor Bestandteil eines Antriebs für ein Fahrzeug-Schiebedach, einen Fahrzeug-Windabweiser oder ein Beschattungsmittel für ein Fahrzeugfenster eines transparenten Fahrzeug-Schiebedachs bilden.

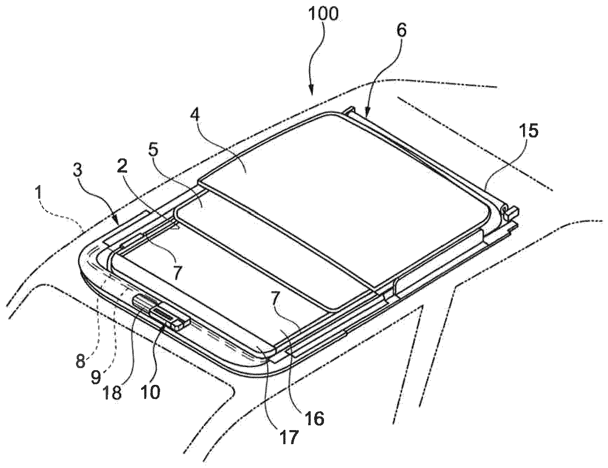

Nachfolgend wird die Erfindung anhand der Zeichnung näher erläutert. Die einzige Figur der Zeichnung, Fig. 1, zeigt eine von einem Elektromotor angetriebene Schiebedachanordnung 100 eines Fahrzeugs, im vorliegenden Fall eines Personenkraftfahrzeugs.

In dieser Beschreibung wird zur Vereinfachung der Erläuterung die Vorderseite in Fahrzeuglängsrichtung gemäß Fahrtrichtung als "Vorderseite", die Rückseite als "Rückseite", die linke Seite in Fahrtrichtung als "links" und die rechte Seite bezeichnet als "rechts".

Die Schiebedachanordnung 100 ist in einer Öffnung 2 eines Fahrzeugdachs 1. Die Schiebedachanordnung 100 umfasst einen Rahmen 3, der entlang der Öffnungskante der Öffnung 2 angeordnet ist, eine feststehende Dachplatte 4 (eine Glasplatte in der vorliegenden Ausführungsform), die fest an etwa der hinteren Hälfte des Rahmens 3 (nicht gezeigt) befestigt ist, um die Öffnung 2 zu öffnen und zu schließen, eine verfahrbare Dachplatte 5 und eine Rollier-Einrichtung 6, die an der Unterseite der feststehenden Dachplatte 4 befestigt ist.

Ein Öffnungs- und Schließmechanismus für die verfahrbare Dachplatte umfasst ein Paar linker und rechter Nocken, die mit einer Dachplattenhalterungsleiste verbunden sind, die an der Unterseite der verfahrbaren Dachplatte 5 über Schieber angebracht sind. Die linken und rechten Schieber sind jeweils mit einer linken und rechten Führungsschiene 7 verbunden, die die linke und die rechte Seite des Rahmens 3 bilden, so dass sie nach vorne und hinten verschiebbar sind. Wenn die beiden Schieber nach vorne und nach hinten verschoben werden kann die verfahrbare Dachplatte 5 in diese Richtungen gleiten und zusammen mit ihrer Abstützung gekippt werden. Die Schieber werden von einer einen Elektromotor 18 umfassenden Antriebseinheit 10 über ein erstes Getriebekabel 8 angetrieben.

Eine Rollo-Rollier-einrichtung 6 weist eine Aufwickelrolle 15 auf, die sich in Fahrzeugbreitenrichtung erstreckt, und ein Abschattungsrollo (eine Lichtabschirmfolie) 16 auf, die um die Aufwickelrolle 15 gewickelt ist. Eine in Fahrzeugbreitenrichtung verlaufende Verkleidung 17 dient zur Abdeckung des Rollos 16. Das Rollo 16 wird geöffnet und geschlossen, indem entsprechende Läufer entlang der Führungsschiene 7 vorwärts und rückwärts bewegt werden. Diese Läuferabschnitt werden von der Antriebseinheit 10 über ein zweites Seilzuggetriebe 9 angetrieben.

Die Steuerung des Elektromotors 18 der Antriebseinheit 10 erfolgt über ein Motorsteuerungssignal anwendungsspezifischer Frequenz, das von einer nicht gezeigten elektronischen Motorsteuerungseinheit bereitgestellt wird. Der Elektromotor 18 ist hierbei mit einem vorne liegenden Bereich des Fahrzeugdachs 1 verbunden. Der Elektromotor 18 lässt sich zusätzlich zu dem Motorsteuerungssignal mit einem zusätzlichen Signal ansteuern, dessen Frequenz und Amplitude geeignet ist, den Bereich des Fahrzeugdachs, mit dem der Elektromotor 18 verbunden ist, zur Schallerzeugung in Schwingung zu versetzen. Besagter Bereich des Fahrzeugdachs wirkt dadurch als Lautsprecher, und das durch diesen erzeugte Signal wird entweder zur Wiedergabe von Audioinformation oder zur Reduzierung von mit der Elektromotor- und Dachkomponenten-Betätigung (Betätigung des Schiebdachs und des Rollos) einhergehenden Geräusche genutzt.

### Bezugszeichenliste

- 100: Schiebedachanordnung
- 1: Fahrzeugdach
- 2: Öffnung
- 3: Rahmen
- 4: feststehende Dachplatte
- 5: verfahrbare Dachplatte
- 6: Rollier-Einrichtung
- 7: Führungsschiene
- 8: Getriebekabel
- 9: Seilzuggetriebe
- 10: Antriebseinheit
- 15: Aufwickelrolle
- 16: Rolle
- 17: Verkleidung
- 18: Elektromotor

## Patentansprüche

1. Verfahren zur Ansteuerung eines Elektromotors mit einem Motorsteuerungssignal anwendungsspezifischer Frequenz, das von einer elektronischen Motorsteuerungseinheit bereitgestellt wird, wobei der Elektromotor (18) in einem Fahrzeugdach (1) zum Betätigen einer Komponente dieses Dachs mit einem Bereich des Dachs verbunden zum Einsatz kommt, **dadurch gekennzeichnet, dass** die Motorsteuerungseinheit dazu eingerichtet ist, den Elektromotor (18) mit einem zusätzlichen Signal anzusteuern, dessen Frequenz und Amplitude geeignet ist, den Bereich des Fahrzeugdachs, mit dem er verbunden ist, zur Schallerzeugung in Schwingung zu versetzen, sodass der Bereich des Fahrzeugdachs (1), an dem der Elektromotor (18) angebracht ist, zur gezielten Schallabstrahlung genutzt wird.

2. Verfahren nach Anspruch 1, wobei das zusätzliche Signal dem Motorsteuerungssignal durch die Motorsteuerungseinheit aufgeprägt wird.

3. Verfahren nach Anspruch 1 oder 2, wobei das zusätzliche Signal ein Audiosignal ist.

4. Verfahren nach Anspruch 3, wobei die Motorsteuerungseinheit das zusätzliche Signal zur Schallerzeugung auf Grundlage vorgegebener Dateien bereitstellt, die Audioinformation in digitaler Form enthalten, die in einem Speicher der Motorsteuerungseinheit abgelegt sind, und die von einem in der Motorsteuerungseinheit enthaltenen D/A-Wandler in das analoge zusätzliche Signal umgesetzt werden.

5. Verfahren nach Anspruch 3, wobei die Motorsteuerungseinheit das zusätzliche Signal zur Schallerzeugung auf Grundlage vorgegebener Dateien bereitstellt, die Audioinformation in digitaler Form enthalten, die von einem Empfänger in der Motorsteuerungseinheit empfangen werden, und die von einem in der Motorsteuerungseinheit enthaltenen D/A-Wandler in das analogen zusätzliche Signal umgesetzt werden.

6. Verfahren nach Anspruch 1 oder 2, wobei das zusätzliche Signal zur Schallabstrahlung von Warntönen über den vom Elektromotor (18) in Schwingung versetzten Dachbereich ausgelegt ist, Warntöne abzustrahlen.

7. Verfahren nach Anspruch 1 oder 2, wobei das zusätzliche Signal bezüglich seiner Frequenz und Amplitude auf das Resonanzverhalten des Elektromotors (18) im in Schwingung versetzten Dachbereich so abgestimmt ist, dass es den Schallanteil der Elektromotorresonanz verringert.

8. Verfahren nach Anspruch 1 oder 2, wobei das zusätzliche Signal bezüglich seiner Frequenz und Amplitude derart gewählt ist, Funktionsgeräusche von durch den Elektromotor angetriebenen Kfz-Komponenten zu verringern.

9. Verfahren nach einem der Ansprüche 1 bis 3, wobei der Elektromotor Bestandteil eines Antriebs für ein Fahrzeug-Schiebedach, einen Fahrzeug-Windabweiser oder ein Beschattungsmittel für ein Fahrzeugfenster eines transparentes Fahrzeug-Schiebedachs ist.

## Claims

1. A method for controlling an electric motor with a motor control signal with an application-specific frequency, which is provided by an electronic motor control unit, wherein the electric motor (18) is used in a vehicle roof (1) being connected to a region of the roof for operating a component of said roof, **characterized in that** the motor control unit is configured to control the electric motor (18) with an additional signal, the frequency and amplitude of which are suitable to set the region of the vehicle roof, to which it is connected, into vibration for sound generation, such that the region of the roof (1) to which the electric motor (18) is attached is used for targeted sound emission.

2. The method as claimed in claim 1, wherein the additional signal is superimposed on the motor control signal by the motor control unit.

3. The method as claimed in claim 1 or 2, wherein the additional signal is an audio signal.

4. The method as claimed in claim 3, wherein the motor control unit provides the additional signal for sound generation on the basis of predetermined data files containing audio information in digital form, which are stored in a memory of the motor control unit, and which are converted into the analog additional signal by a D/A converter comprised by the motor control unit.

5. The method as claimed in claim 3, wherein the motor control unit provides the additional signal for sound generation based on predetermined data files containing audio information in digital form, which are received by a receiver in the motor control unit, and which are converted into the analog additional signal by a D/A converter comprised by the motor control unit.

6. The method as claimed in claim 1 or 2, wherein the additional signal for the sound emission of warning tones via the region of the roof which is set in vibration by the electric motor (18), is designed to emit warning tones.

7. The method as claimed in claim 1 or 2, wherein the additional signal is tuned with respect to its frequency and amplitude to the resonance behavior of the electric motor (18) in the region of the roof which is set into vibration so that it reduces the sound portion of the electric motor resonance.

8. The method as claimed in claim 1 or 2, wherein the additional signal is chosen with respect to its frequency and amplitude so as to reduce functional noise of vehicle components driven by the electric motor.

9. The method as claimed in any one of claims 1 to 3, wherein the electric motor is part of a drive for a vehicle sliding roof, a vehicle wind shield or a shading means for a vehicle window of a transparent vehicle sliding roof.

## Revendications

1. Procédé permettant de piloter un moteur électrique à l'aide d'un signal de commande de moteur à fréquence spécifique à l'application et qui est fourni par une unité de commande de moteur électronique, dans lequel le moteur électrique (18) est mis en œuvre dans un toit de véhicule (1) en étant relié à une zone du toit pour actionner un composant de ce toit,
**caractérisé en ce que** l'unité de commande de moteur est conçue pour piloter le moteur électrique (18) à l'aide d'un signal supplémentaire dont la fréquence et l'amplitude sont adaptées pour faire vibrer la zone du toit de véhicule à laquelle il est relié pour générer du son de façon à utiliser la zone du toit de véhicule (1) à laquelle est fixé le moteur électrique (18) pour un rayonnement sonore.

2. Procédé selon la revendication 1, dans lequel le signal supplémentaire est superposé au signal de commande de moteur par l'unité de commande de moteur.

3. Procédé selon la revendication 1 ou 2, dans lequel le signal supplémentaire est un signal audio.

4. Procédé selon la revendication 3, dans lequel l'unité de commande de moteur fournit le signal supplémentaire pour la génération du son sur la base de fichiers prédéfinis qui contiennent des informations audio sous forme numérique qui sont stockées dans une mémoire de l'unité de commande de moteur, et qui sont transformés en signal supplémentaire analogique par un convertisseur N/A contenu dans l'unité de commande de moteur.

5. Procédé selon la revendication 3, dans lequel l'unité de commande de moteur fournit le signal supplémentaire pour la génération du son sur la base de fichiers prédéfinis qui contiennent des informations audio sous forme numérique qui sont reçues par un récepteur dans l'unité de commande de moteur, et qui sont transformées en signal supplémentaire analogique par un convertisseur N/A contenu dans l'unité de commande de moteur.

6. Procédé selon la revendication 1 ou 2, dans lequel le signal supplémentaire pour un rayonnement sonore d'avertissements sonores par l'intermédiaire de la zone de toit mise en vibration par le moteur électrique (18) est conçu pour émettre des avertissements sonores.

7. Procédé selon la revendication 1 ou 2, dans lequel le signal supplémentaire est accordé au niveau de sa fréquence et de son amplitude sur le comportement de résonance du moteur électrique (18) dans la zone de toit mise en vibration de façon à diminuer la partie sonore de la résonance de moteur électrique.

8. Procédé selon la revendication 1 ou 2, dans lequel le signal supplémentaire est sélectionné au niveau de sa fréquence et de son amplitude de façon à diminuer des bruits de fonctionnement de composants automobiles entraînés par le moteur électrique.

9. Procédé selon l'une quelconque des revendications 1 à 3, dans lequel le moteur électrique fait partie d'un entraînement pour un toit ouvrant de véhicule, un déflecteur de vent de véhicule ou un moyen d'ombrage pour une vitre de véhicule d'un toit ouvrant de véhicule transparent.
